Europäisches Patentamt

(19) European Patent Office

Office européen des brevets

(11) Publication number: **0 332 899**
**A2**

(12) **EUROPEAN PATENT APPLICATION**

(21) Application number: **89103277.3**

(22) Date of filing: **24.02.89**

(51) Int. Cl.⁴: **B29C 45/14 , F16J 3/02**

(30) Priority: **14.03.88 US 167613**

(43) Date of publication of application:
**20.09.89 Bulletin 89/38**

(84) Designated Contracting States:
**DE FR GB**

(71) Applicant: **ALLIED-SIGNAL INC. (a Delaware corporation)**
**Columbia Road and Park Avenue P.O. Box 2245R**
**Morristown New Jersey 07960(US)**

(72) Inventor: **Gibson, Christopher M., c/o Allied-Signal Inc.**
**Law Department, P.O. Box 2245R**
**Morristown New Jersey 07960(US)**

(74) Representative: **Baillie, Iain Cameron et al c/o Ladas & Parry Isartorplatz 5**
**D-8000 München 2(DE)**

(54) **Injection molding of fabric-reinforced elastomeric diaphragm.**

(57) The invention relates to a method of injection molding and a mold (14, 15) for the forming of a fabric reinforced elastomeric diaphragms (12).

*FIG. 3*

## INJECTION MOLDING OF FABRIC-REINFORCED ELASTOMERIC DIAPHRAGM

This invention relates generally to the formation of fabric-reinforced elastomeric diaphragms, and more particularly to a method and apparatus for injection molding such diaphragms.

Diaphragms are in widespread use in a number of applications where a differential pressure is applied to a piston in order to provide a mechanical displacement output. The diaphragm acts as a flexible pressure barrier which is, for example, clamped to the walls of a cylinder at its outer edges while the inner circumference is attached to a piston such that the piston is free to move within the cylinder in response to pressures applied to the head of the piston.

Traditionally, such diaphragms were formed solely of a gas impermeable elastomeric material which provided the desired flexibility and resilience. these types of elastomeric diaphragm are formed either by injection molding or by compression molding operations. Elastomeric diaphragms having a fiber-reinforced back material integral therewith are also available for certain types of applications. When properly constructed, fiber-reinforced elastomeric diaphragms offer a number of particular advantages over diaphragms formed completely of elastomer. For example, a fiber-reinforced elastomeric will not stretch under the exertion of an applied force, therefore, the entire pressure differential is applied to the piston head and is not absorbed with stretching of the elastomer. Fiber-reinforcement also allows higher pressures to be exerted on opposite sides of the diaphragm, as well as offering increased overall life of the diaphragm.

Currently, there are two methods of making a fabric-reinforced elastomeric diaphragm. The first method of forming is to calendar a flat sheet of elastomer and apply to one side thereof a sheet of fabric reinforcement prior to curing of the elastomeric material. This is a perfectly acceptable method of forming a flat diaphragm, the flat diaphragm has to be compression molded to form the desired complex shape. During this process, the fabric material tends to locally migrate through the fabric resulting in sections where the fabric material is present on the high pressure side of the diaphragm. This condition may be fatal when a pressure is applied to the high pressure side of the diaphragm. The pressure tends to pass through the fiber-reinforced material and separate the elastomeric material from the fiber reinforcement, thereby causing local blistering or ballooning of the elastomer and failure of the diaphragm.

The second method of forming a fabric-reinforced elastomeric diaphragm utilizes a compression mold forming device wherein a preformed fabric reinforcement and a slug of elastomeric material, both applied by hand, are formed and cured within a compression molding device. Preforming of the fabric reinforcing material is required to prevent migration of the fabric and strike-through of the elastomer from occurring during the curing operation. However, the hand operation associated with the forming of the fabric-reinforced elastomeric diaphragm within the compression molding device is time-consuming, costly and extremely labor intensive.

Accordingly, it would be advantageous to have a method of forming a fiber reinforced elastomeric diaphragm which eliminates migration of the fabric material, reduces the amount of human operating time, and is cost effective.

The present invention contemplates the forming of fabric reinforced contoured elastomeric diaphragms in an injection molding precess, which process eliminates the fabric migration and elastomeric migration or strike-through, as well as problems associated with fabric weave separation or tearing during injection molding. The present invention is adaptable to automation in the forming of reinforced contoured elastomeric diaphragms while eliminating labor intensive operations.

The present invention starts with a precut sheet of fabric-reinforcing material. This sheet is then formed into a shape approximating the complex shape which is required for the diaphragm. during this process, a fabric primer may be applied to the fabric in order to help the fabric hold the desired shape. The fabric is then placed within an injection molding device between a top mold plate and a bottom mold plate is filled with elastomeric material. A slight amount of elastomeric material may be allowed to overflow into a relief groove cut within the outer radius of the top mold plate. The elastomeric material is then cured for the required period of time prior to removal of the formed fabric-reinforced contoured elastomeric diaphragm may then be trimmed of excess or unwanted material to form the final shape. Through proper design of the injection port and mold cavity, in combination with carefully controlled viscosity properties and injection pressures for the elastomer, the fabric-reinforced contoured elastomeric diaphragms may be fabricated without migration of the fabric material or distortion of the weave of the fabric-reinforcement material.

It is thus an object of the present invention to provide a method of forming a fabric-reinforced elastomeric diaphragm having a complex shape.

It is a further objection of the invention to provide a fabric-reinforced contoured elastomeric diaphragm which has the fabric-reinforcement material substantially only on one side of the diaphragm.

An alternative object of the invention is to provide a fabric-reinforced contoured elastomeric diaphragm having the fabric reinforcement material essentially central to the elastomeric diaphragm thickness.

It is a further object of the invention to provide a unique injection mold for the forming of a fabric-reinforced elastomeric diaphragm.

These and other advantages, objects, and features of the present invention will become more apparent after considering the following description taken in conjunction with the illustrated embodiments in the accompanying drawings.

Fig. 1 is an illustration of the process of forming a fiber-reinforced elastomeric diaphragm by a compression molding technique.

Fig. 2 is an illustration of the method of forming a fiber-reinforced elastomeric diaphragm according to the present invention;

Fig. 3 is a detailed view of the injection molding apparatus top and bottom forming dies of the present invention;

Fig. 4 is a cross-sectional view showing the injection molding apparatus mold portion of the present invention;

Fig. 5 is a cross-sectional view of a portion of a fabric-reinforced elastomeric diaphragm;

Fig. 6 is a pictorial view of a diaphragm formed by the process of the present invention prior to the trimming thereof;

Fig. 7 is a pictorial view of a diaphragm formed by the process of the present invention in its final form.

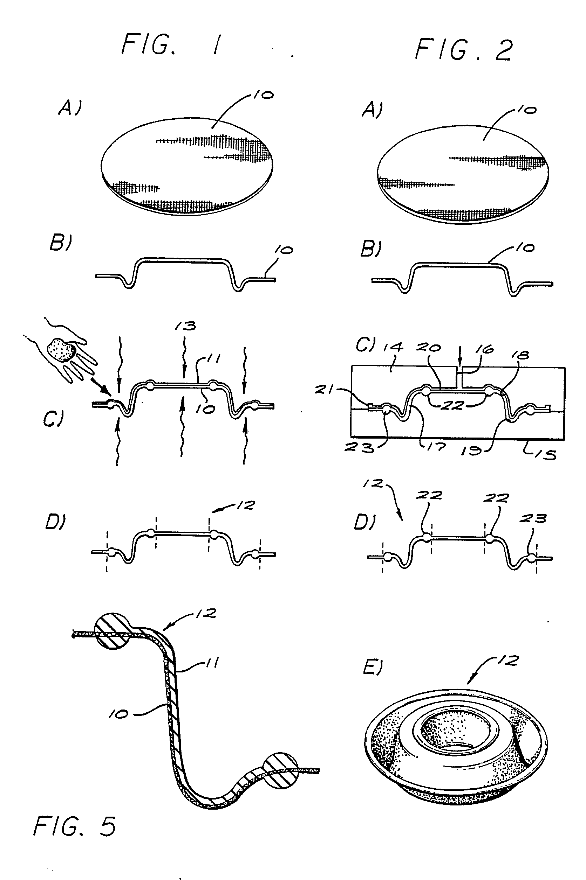

Within Fig. 1 the prior art method of forming a fabric-reinforced elastomeric diaphragm is illustrated. Letter A designates the pictorial view of a fabric material 10 cut into a circular shape. Step B shows the fabric material 10 formed into a complex shape in profile view. Step C illustrates the addition of the elastomeric material 11 onto the fabric material 10 and the formation of the fiber-reinforced elastomeric diaphragm 12 within a compression molding process as illustrated by the application of heat and pressure 13. Step D illustrates the fabric-reinforced elastomeric diaphragm 12 removed from the compression molding device and ready for trimming to final form.

Fig. 2 represents the method of forming a fabric-reinforced elastomeric diaphragm by the method of the present invention. Within Fig. 2 Step A depicts the fabric material 10 cut to a generally circular shape. Step B shows the profile of the preformed complex shape for the fabric material 10 prior to the fabric material 10 being placed within the injection molding apparatus. Step C depicts the injection molding apparatus wherein the injection molding apparatus includes a top die 14 and a bottom die 15 which combine to define a diaphragm cavity 17 located between the top die face 19 of the bottom die 15. The fabric material 10 in its preformed shape is placed within the diaphragm cavity 17 and clamped at its outer edges between the top die 14 and bottom die 15. The top die 14 includes an injection port 16 configured to deliver elastomeric material 11 at the center of the diaphragm cavity 17. The top die 14 also includes sprues 20 cut into the top die face 18 so as to extend radially outwardly from said injection port 16 to direct the follow of the elastomer. Generally, the flexing surfaces of the diaphragm will be approximately 0.025 cm to 0.10 cm thick, thus defining the thickness of cavity 17. The diaphragm cavity 17 may also include an inner bead 22 and an outer bead 23 wherein the diaphragm cavity 17 has a substantially larger thickness with respect to the remainder of the diaphragm cavity 17. An overflow port 21 may also be included radially outwardly of the outer bead 23 and cut into either die face 18 and 19. The elastomeric material 11 having a high viscosity is injected under pressure through the injection port 16, flows radially outward and completely fills the diaphragm cavity 17. The elastomeric material 11 is then cured by the application of heat and pressure. Subsequently, step D shows the fabric-reinforced elastomeric diaphragm 12 after removal from the injection molding apparatus. It may then be desirable to trim the fabric-reinforced elastomeric diaphragm 12 radially inwardly of the inner beads 22 and radially outwardly of the outer beads 23 to form the desired final complex contoured shape for the fabric-reinforced elastomeric diaphragm 12 as illustrated by E within Fig. 2.

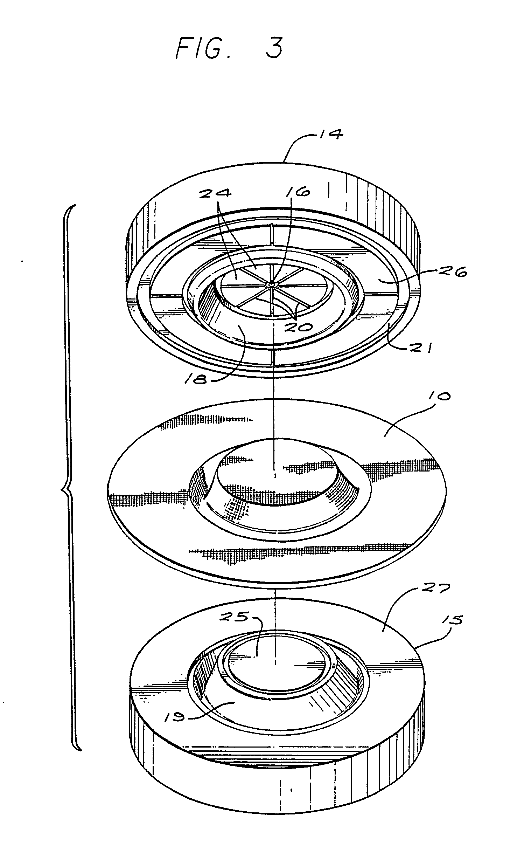

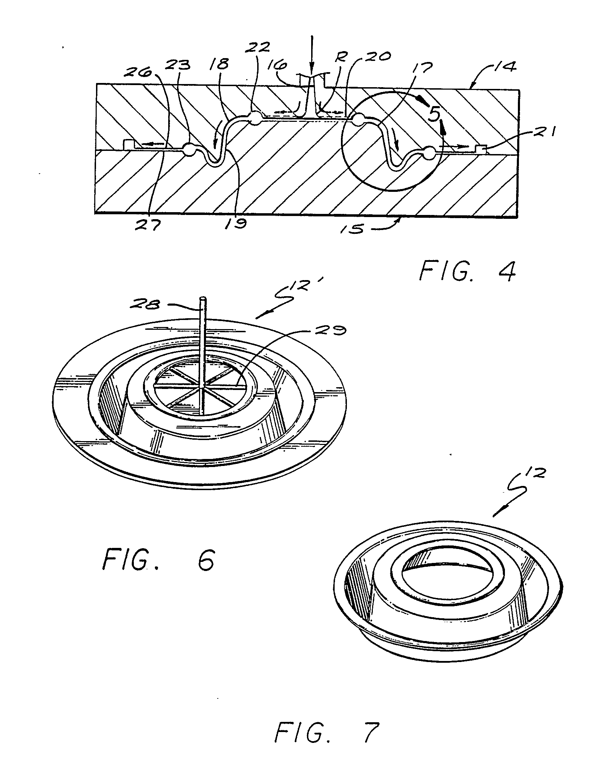

Fig. 3 shows a more detailed view of the top die 14 and bottom die 15. Depicted in the top die 14 is the top die face 18 which includes the sprues 20 and the injection port 16, top die 14 may also include the inner bead 22, outer bead 23 and the overflow port 21. The bottom die 19 is generally depicted as having the contoured bottom die face 19 as well as the optional inner bead 22 and outer bead 23 therein. The top die 14 may also include lands 24 interspaced between the sprues 25 within the top die face 18 which lands 24 may be formed so as to fixedly clamp the fabric material 10 at its central locations upon a flat portion 25 of the bottom die face 19. The fabric material 10 may also be clamped at its outer diameter sections between a top flat ring portion 26 of the top die face 18, and a bottom flat ring portion 27 of the bottom die face 19. By the use of very close tolerances between these sections of the top die face 18 and the bottom die face 19, the fabric material 10 in its preformed shape may be held rigidly in place. The elastomeric material 11, injected via the injection port 16 into the diaphragm cavity 17, is radially dispersed via the sprues 20 to facilitate the uniform filling of the diaphragm cavity 17. The sprues 20 may typically be on the order of 0.01 to 0.1 centimeters in depth. However, the high viscosity elastomer naturally follows the sprues 20 due to the lower resistance to flow in the expanded volume. The injection of the elastomeric material 11 is generally shown within Fig. 4, wherein the arrows indicate the direction of elastomeric material flow. Also shown is the geometry of the injection port 16 which generally truncates towards the mold cavity 17 and features a flared radius R at the intersection with the mold cavity 17. It has been found that a squared off intersection tends to direct the elastomer into the fabric weave before the elastomer flows radially outward, thus flowing over the fabric material 10 instead of flowing within the weave of the fabric material 10, thereby reducing stress within the fabric material 10. This is critical for very thin diaphragms contemplated by the invention. When the elastomeric material 11 has completely filled the diaphragm cavity 17, the elastomeric material 11 may continue to flow radially outwardly into the overflow port 21.

A detailed cross-sectional view of a portion of the desired resulting fiber-reinforced elastomeric diaphragm 12 is shown within Fig. 5. Herein, it can be seen that the fabric material 10 is located substantially entirely on one side of the fabric reinforced elastomeric diaphragm 12, while the elastomeric material 11 is located on the other side thereof. The elastomeric material 11 also penetrates the fabric material 10 and bonds thereto. Additionally, within the inner bead 22 and outer bead 23 sections, the elastomeric material 11 has penetrated and formed a bead on the fabric side of the fabric-reinforced elastomeric diaphragm 12.

Fig. 6 shows the fabric-reinforced elastomeric diaphragm 12 after removal from the injection molding apparatus of Fig. 4. Within Fig. 6 an elastomer column 28 projects from the center of the fabric- reinforced elastomeric diaphragm 12. Additionally, ridges 29 diverge radially outwardly from the elastomer column 28 towards the inner bead 22 of the fabric-reinforced elastomeric diaphragm 12. The elastomer column 28 is formed within the injection port 16 of the top die 14, while the ridges 29 are formed within the sprues 20 of the top die 14. The excess material radially inward of the inner bead 22 and radially outward of the outer bead 23 may be trimmed if desired to produce the final shape of the fabric-reinforced elastomeric diaphragm 12 as shown with Fig. 7.

While the mold apparatus of Figs. 2-4 depict mold geometries for forming the diaphragm of Figs. 6 and 7, which is generally referred to as a convoluted diaphragm, the present invention is also equally applicable to other thin walled diaphragm configurations such as top hat, double tapered top hat, and irregular (circular and non-circular), any of which may optionally include inner and outer beads.

During the injection of the elastomer into the mold cavity 17, the elastomer flows over and permeates the fabric material 10, subjecting the fabric material 10 to stress which may tend to separate or distort the weave. To prevent this type of separation, the rheology of the elastomer and the plasticizing agent must be matched to the fabric material 10. This invention is generally applicable to high viscosity elastomers, either thermosetting or thermoplastic, that are specifically designed by their formula to have an injection moldable consistency. Typical viscosities for the high viscosity elastomers would be on the order of 1000 poise. The adjustment of a specific elastomeric formula, to meet both the particular injection molding process conditions and the specific requirements of a particular part design including the type of fabric, necessary to successfully manufacture a quality part, is made possible by the proper selection of appropriate ingredients, especially the processing or plasticizing agent or aid. The types of high viscosity elastomers contemplated by this invention, as defined by the American Society of Testing and Materials (ASTM), includes "M" class rubbers having a saturated chain of the polymethylene type, "R" class rubbers having an unsaturated carbon chain including natural rubbers and synthetic rubbers derived at least partly from diolefins, "Q" class rubbers having silicon and oxygen in the polymer chain, "U" class rubbers having carbon, oxygen, and nitrogen in the polymer chain, and thermoplastic elastomers including YSBR, YXSBR and YBPO.

The types of fabric material contemplated by this invention include nylon, dacron, polyester, glass, cotton, silk, wool, as well as the aromatic polyamides with the trade names of Nomex and Kevlar, and florocarbons such as Teflon. While the types of elastomers listed above are generally chemically compatible with the fabric must be chosen based on the desired properties such as the thickness and strength of the fabricated diaphragm. Additionally, the rheology of each elastomer, i.e. its viscosity and flow characteristics, must be considered in choosing the fabric material.

In one test run fabrication of a fabric reinforced elastomeric diaphragm in accordance with the present invention, a liquid silicon rubber having a viscosity of 1000 poise, commercially available under the trade name Dow Corning 590A/B silastic was injected into a mold containing a preformed nylon fabric material. The elastomer was injected at a pressure of 27.5 bar (400 psi) and cured for 30 seconds at a temperature of 140°C (270°F). The resulting diaphragm exhibited excellent adhesion of the elastomer to the fabric, no separation of the fabric weave, and no deleterious migration of the fabric material.

Although the invention is disclosed in what is presently considered to be the preferred embodiment, it may be appreciated that modifications and variations of the invention will occur to those skilled in the art. Accordingly, the description herein is intended to illustrate the present invention, but not limit the scope thereof. The invention is therefore defined only by the scope of the appended claims.

## Claims

1. A method of forming a fabric reinforced elastomeric diaphragm (12) comprising the steps of:
forming a woven fabric material (10) into a complex shape; clamping said fabric material (10) within a mold cavity (17) of an injection molding machine, said mold cavity (17) having a thin cross-sectional thickness; preparing a high viscosity elastomeric material for injection molding; characterized by:
injecting said high viscosity elastomeric material into said mold cavity (17); directing the flow of said high viscosity elastomeric material over said fabric material (10) while preventing localized stress concentrations and weave distortion within said fabric material (10); and applying heat and pressure to cure said high viscosity elastomeric material to form said diaphragm (12).

2. The method according to claim 1 wherein said mold is characterized by: a top die (14) including an injection port (16) allowing injection of said elastomeric material into said mold cavity (17), said injection port (16) including a flared radius inlet to said mold cavity (17) and a plurality of sprues (20) relieved into said top die (14) running radially outward from said injection port (16).

3. The method according to any proceeding claim wherein said woven fabric material (10) is selected from the group consisting of nylon, dacron, polyester, glass, cotton, silk, wool, Nomex, Kevlar and Teflon; and said high viscosity elastomeric material is selected from the group consisting of "M" class rubbers, "R" class rubbers, "Q" class rubbers, "U" class rubbers and thermoplastic elastomers.

4. The method according to any proceeding claim characterized by: controlling the viscosity properties, injection pressure, and temperature of said elastomeric material to promote uniform filling of said mold cavity (17), prevent distortion of the weave of said fabric material (10) and maximize bonding of said elastomeric material to said woven fabric material (10).

5. A fabric reinforced elastomeric diaphragm (12) made according to the method of any of claims 1-4.

6. A mold in the injection molding of a fabric reinforced elastomeric diaphragm (12) characterized by a bottom die (15) having a bottom die face (19) defining a desired low pressure side of said diaphragm;
a top die (14) having a top die face (18) defining a desired high pressure side of said diaphragm, said top die (14) including an injection port (16) for allowing injection of an elastomeric material, said injection port (16) including a flared radius at the intersection with said top die face (18), said top die face (18) also having a plurality of sprues (20) radiating from said injection port (16); and
means for affixing said top die (14) to said bottom die (15) such that said top die face (18) and said bottom die face (19) combine to define a mold cavity (17) having a thin cross-sectional thickness.

7. The mold (14, 15) according to any proceeding claim characterized in that said top die face (18) and said bottom die face (19) include sections having close dimensional tolerances (24, 25) which combine to securely hold a fabric material (10) placed therebetweentherebetween.

8. The mold according to any proceeding claim characterized in that said mold cavity (17) includes a cross section corresponding to the flexing portion of said diaphragm (12) having a thickness of between 0.025 and 0.09 centimeters.

FIG. 1

FIG. 2

FIG. 5

FIG. 3

FIG. 4

FIG. 6

FIG. 7